# EUROPÄISCHE PATENTSCHRIFT

(11) **EP 3 502 494 B1**
(45) Veröffentlichungstag und Bekanntmachung des Hinweises auf die Patenterteilung: **06.01.2021**
(21) Anmeldenummer: 18206218.2
(22) Anmeldetag: 14.11.2018
(51) Int. Cl.: F16C 7/02, F16C 33/10, F01M 1/06, F01M 1/08

(54) **VORRICHTUNG ZUM SCHMIEREN EINES PLEUELLAGERS**
DEVICE FOR LUBRICATING A CONNECTING ROD BEARING
DISPOSITIF DE LUBRIFICATION D'UN PALIER DE BIELLE

(30) Priorität: 20.12.2017 DE 102017130691
(43) Veröffentlichungstag der Anmeldung: 26.06.2019
(73) Patentinhaber: MAN Truck & Bus SE, 80995 München (DE)
(72) Erfinder: Malischewski, Thomas, 91560 Heilsbronn (DE); Dietrich, Jens, 91560 Heilsbronn (DE); Hirschmann, Steffen, 91413 Neustadt an der Aisch (DE); Renner, Dominik, 91522 Ansbach (DE)
(74) Vertreter: v. Bezold & Partner Patentanwälte - PartG mbB

(56) Entgegenhaltungen:
- DE-B- 1 097 210
- FR-A- 838 632
- JP-A- 2005 331 056

## Beschreibung

Die Erfindung betrifft eine Vorrichtung zum Schmieren eines Pleuellagers an einer Kurbelwelle einer Brennkraftmaschine.

Es ist bekannt, ein Pleuellager an einem Hubzapfen einer Kurbelwelle von innen durch die Kurbelwelle mit Schmieröl zu versorgen. Hierzu kann in einer Hauptlagerschale eines Hauptlagers der Kurbelwelle eine Nut eingebracht sein, die mit Drucköl versorgt ist. Über eine Bohrung in der Kurbelwelle vom Hauptlager zum Pleuellager am Hubzapfen der Kurbelwelle kann das Öl zu dem Pleuellager fließen, solange die Bohrung im Hauptlager mit der Nut der Hauptlagerschale in Überdeckung ist. Eine derartige Schmiervorrichtungen ist beispielsweise aus der DE 10 2004 032 590 A1 bekannt.

Die DE 10 2004 048 939 A1 offenbart ferner eine Pleuelstange, die einen Pleuelstangenkörper mit einer in einem ersten Ende (Pleuelfuß) ausgebildeten Kurbelzapfenbohrung (großes Pleuelauge) und einer in einem zweiten Ende (Pleuelkopf) ausgebildeten Bolzenbohrung (kleines Pleuelauge) aufweist. Die Pleuelstange weist ein Rohr, das mit dem Pleuelstangenkörper verbunden ist, um Schmiermittel vom ersten Ende zum zweiten Ende zu fördern, auf.

An den bekannten Schmiervorrichtungen für Pleuellager kann nachteilig sein, dass die Bohrungen in der Kurbelwelle nur aufwendig und kostenintensiv herzustellen sind. Ferner können die Bohrungen die Dauerhaltbarkeit der Kurbelwelle verringern. Zusätzlich erfordert die Versorgung der Pleuellager mit Schmieröl über die Hauptlagerschalen einen großen Öldurchsatz, der von einer Ölpumpe bereitgestellt werden muss, die hierfür entsprechend dimensioniert und unter Energieverbrauch (Kraftstoffverbrauch) angetrieben werden muss.

Die JP 2005 331056 A offenbart die Merkmale des Oberbegriffs des Anspruchs 1, eine Vorrichtung zum Zuführen von Schmieröl zu einem Lager, das zwischen einem Kurbelzapfenteil einer Kurbelwelle und einem großen Endteil einer Pleuelstange angeordnet ist. Die Vorrichtung weist einen Kolbenbolzen mit einem geschlossenen Raum auf, zu dem Schmieröl aus einem Kanal des Kolbens zuführbar ist und aus dem Schmieröl über einen Kanal in der Pleuelstange zu dem Lager zuführbar ist.

Der Erfindung liegt die Aufgabe zu Grunde, eine alternative und/oder verbesserte Vorrichtung bzw. ein alternatives und/oder verbessertes Verfahren zum Schmieren eines Pleuellagers einer Kurbelwelle vorzusehen, mit der/dem insbesondere Nachteile aus dem Stand der Technik überwunden werden können.

Die Aufgabe wird gelöst durch eine Vorrichtung gemäß dem unabhängigen Anspruch. Vorteilhafte Weiterbildungen sind in den abhängigen Ansprüchen und der Beschreibung angegeben.

Die Vorrichtung ist zum Schmieren eines Pleuellagers an einer Kurbelwelle einer Brennkraftmaschine geeignet. Die Vorrichtung weist einen Kolben mit einem Fluidkanal, insbesondere einem inneren Kolbenkühlfluidkanal, und einem Auslasskanal in Fluidverbindung mit dem Fluidkanal auf. Die Vorrichtung weist ein Pleuel, das gelenkig, insbesondere schwenkbar, mit dem Kolben verbunden ist und ein kleines Pleuelauge, ein großes Pleuelauge und einen (insbesondere inneren) Verbindungskanal aufweist, auf. Das große Pleuelauge ist zur Aufnahme des Pleuellagers ausgebildet. Das kleine Pleuelauge ist in Fluidverbindung mit dem Auslasskanal. Der Verbindungskanal bildet eine Fluidverbindung zwischen dem kleinen Pleuelauge und dem großen Pleuelauge, so dass ein Fluid, insbesondere ein Kühlschmierfluid (z. B. Öl), von dem Fluidkanal über den Auslasskanal, das kleine Pleuelauge und den Verbindungskanal zu dem großen Pleuelauge zuführbar ist oder zugeführt wird.

Damit kann das Pleuellager an der Kurbelwelle mittels Kühlöl von dem Kolben geschmiert werden. Insbesondere kann das Pleuellager mittels Kühlöl aus dem inneren Kolbenkühlkanal des Kolbens geschmiert werden. Das Kühlöl dient somit auch als Schmieröl. Hierdurch wird ermöglicht, alle Schmierölbohrungen in der Kurbelwelle entfallen zu lassen. Dadurch kann die Dauerhaltbarkeit der Kurbelwelle deutlich gesteigert und die Kosten gesenkt werden. Weiterhin können die Lagernuten in den Hauptlagerschalen entfallen, was den Öldurchsatz deutlich minimieren kann und zu Einsparungen beim Kraftstoffverbrauch führen kann.

In einem bevorzugten Ausführungsbeispiel weist die Vorrichtung ferner einen Kolbenbolzen auf, der in dem kleinen Pleuelauge aufgenommen ist, das Pleuel schwenkbar mit dem Kolben verbindet und eine Fluidkammer, die insbesondere als beidseitig verschlossene Durchgangsbohrung ausgebildet ist, aufweist, die eine Fluidverbindung zwischen dem Auslasskanal und dem Verbindungskanal bildet. Damit kann das Fluid von dem Fluidkanal über den Auslasskanal, die Fluidkammer, das kleine Pleuelauge und den Verbindungskanals zu dem großen Pleuelauge zuführbar sein oder zugeführt werden. Die Fluidkammer kann ein ausreichendes Fluidreservoir zur kontinuierlichen Schmierung bereitstellen.

In einer Weiterbildung weist der Kolbenbolzen eine Außenumfangsnut, in die der Auslasskanal mündet, auf und die Fluidkammer des Kolbenbolzens ist in Fluidverbindung zu der Außenumfangsnut vorgesehen. Insbesondere kann sich die Außenumfangsnut um einen gesamten Umfang des Kolbenbolzens erstrecken. Damit kann unabhängig von einer Drehposition des Kolbenbolzens Fluid von dem Auslasskanal in die Fluidkammer des Kolbenbolzens zugeführt werden.

In einem Ausführungsbeispiel weist die Vorrichtung ferner ein Kolbenbolzenlager auf, das in dem kleinen Pleuelauge aufgenommen ist und einen (Fluid-) Durchlass aufweist, der sich zumindest teilweise um einen Umfang des Kolbenbolzenlagers erstreckt. Über den Durchlass kann ein Fluid von einer Innenseite des Kolbenbolzenlagers zu einer Außenseite des Kolbenbolzenlagers geführt werden. Damit kann eine Fluidverbindung zwischen der Fluidkammer des Kolbenbolzens und dem Verbindungskanal (bspw. über Auslasskanäle des Kolbenbolzens) gebildet werden.

In einem weiteren Ausführungsbeispiel ist der Durchlass so dimensioniert, dass er als Drossel wirkt, um insbesondere eine Kavitationsneigung im Verbindungskanal zu verringern. Damit kann insbesondere bei Abwärtsbewegungen des Pleuels (Kolbenbewegung vom oberen Totpunkt zum unteren Totpunkt) eine Kavitation des Fluids im Verbindungskanal verhindert oder verringert werden. Bei einer nachfolgenden Aufwärtsbewegung des Pleuels (Kolbenbewegung vom unteren Totpunkt zum oberen Totpunkt) wird somit ein Durchfluss durch den Verbindungskanal nicht oder kaum beeinträchtigt.

In einer Ausführungsform weist der Kolbenbolzen eine Mehrzahl von Auslasskanälen auf, die in einer Umfangsrichtung um eine Mittellängsachse des Kolbenbolzens beabstandet zueinander sind und Fluidverbindungen zwischen der Fluidkammer und dem Durchlass bilden. Insbesondere sind die Auslasskanäle so angeordnet, dass unabhängig von einer Drehposition des Kolbenbolzens immer mindestens ein Auslasskanal in den Durchlass mündet.

In einer weiteren Ausführungsform weist der Kolbenbolzen eine Mehrzahl von Einlasskanälen auf, die in einer Umfangsrichtung um eine Mittellängsachse den Kolbenbolzen beabstandet zueinander sind und Fluidverbindungen zwischen der Außenumfangsnut und der Fluidkammer des Kolbenbolzens bilden. Insbesondere mündet die Mehrzahl von Einlasskanälen in die Fluidkammer.

In einer weiteren Ausführungsform ist die Mehrzahl von Einlasskanälen in einer Umfangsrichtung um die Mittellängsachsachse des Kolbenbolzens drehsymmetrisch angeordnet. Alternativ oder zusätzlich ist die Mehrzahl von Auslasskanälen in einer Umfangsrichtung um die Mittellängsachsachse des Kolbenbolzens drehsymmetrisch angeordnet.

Insbesondere kann sich die Mehrzahl von Auslasskanälen des Kolbenbolzens mittig im Kolbenbolzen erstrecken alternativ oder zusätzlich kann sich die Mehrzahl von Einlasskanälen in Stirnendbereichen im Kolbenbolzen erstrecken.

In einer Ausführungsvariante weist die Vorrichtung mindestens ein Fluidführungselement, insbesondere ein Umlenkrohrstück oder ein Trichterbauteil, auf, das unter einer Auslassöffnung des Auslasskanals angeordnet ist und über das das Fluid aus dem Auslasskanal aufgenommen und, insbesondere stirnseitig, in die Fluidkammer des Kolbenbolzens zuführbar ist. Insbesondere kann das mindestens eine Fluidführungselement anstelle der Einlasskanäle des Kolbenbolzens vorgesehen sein.

Beispielsweise können zwei Fluidführungselemente an entgegengesetzten Stirnseiten des Kolbenbolzens vorgesehen sein.

In einer weiteren Ausführungsvariante ist das mindestens eine Fluidführungselement drehfest in einem Kolbenbolzenauge des Kolbens gelagert oder drehfest mit dem Kolbenbolzen verbunden. Bei einer drehfesten Verbindung des mindestens einen Fluidführungselements mit dem Kolbenbolzen kann das mindestens eine Fluidführungselement insbesondere so ausgebildet sein, sodass Fluid kontinuierlich zwischen dem Auslasskanal des Kolbens und der Fluidkammer zuführbar ist oder zugeführt wird, unabhängig von einer Drehposition des Kolbens.

In einem Ausführungsbeispiel mündet der Auslasskanal des Kolbens in ein Kolbenbolzenauge. Insbesondere kann ein weiterer Auslasskanal des Kolbens vorgesehen sein, der in Fluidverbindung mit dem Fluidkanal ist und in ein gegenüberliegendes Kolbenbolzenauge des Kolbens mündet.

Beispielsweise kann der Kolbenbolzen eine weitere Außenumfangsnut, in die der weitere Auslasskanal mündet, aufweisen und die Fluidkammer des Kolbenbolzens in Fluidverbindung zu der weiteren Außenumfangsnut vorgesehen sein.

Insbesondere können die Mehrzahl von Einlasskanälen zusätzlich Fluidverbindungen zwischen der weiteren Außenumfangsnut und der Fluidkammer des Kolbenbolzens bilden.

In einem weiteren Ausführungsbeispiel ist die Fluidverbindung zwischen dem Auslasskanal und dem Verbindungskanal eine kontinuierliche Fluidverbindung. Damit kann kontinuierlich Fluid von dem Fluidkanal des Kolbens zu dem Pleuellager an der Kurbelwelle zugeführt werden.

In einem weiteren Ausführungsbeispiel weist die Vorrichtung eine Fluideinspritzdüse auf, die auf eine Einlassöffnung eines Einlasskanals des Kolbens, der in Fluidverbindung mit dem Fluidkanal ist, gerichtet ist. Über die Fluideinspritzdüse kann Öl über den Einlasskanal in den Fluidkanal eingespritzt werden. Dieses Öl kann neben der Kühlung des Kolbens dazu verwendet werden, über den Auslasskanal und den Verbindungskanal zu dem Pleuellager geleitet zu werden, um dieses zu schmieren.

Insbesondere kann die Fluideinspritzdüse mit einem Kühlschmierfluid, zum Beispiel Öl, aus einem Kühlschmierkreislauf der Brennkraftmaschine versorgt werden.

In einem weiteren Ausführungsbeispiel ist die Fluideinspritzdüse separat zu dem Kolben und zu dem Pleuel vorgesehen. Alternativ oder zusätzlich ist die Fluideinspritzdüse in oder an einem Kurbelgehäuse aufgenommen oder befestigt.

Insbesondere kann sich der Fluidkanal ringförmig im Kolben erstrecken.

Die Erfindung betrifft auch ein Kraftfahrzeug, insbesondere Nutzfahrzeug (zum Beispiel Omnibus oder Lastkraftwagen), mit einer Vorrichtung wie hierin offenbart.

Es ist auch möglich, die Vorrichtung wie hierin offenbart für Personenkraftwagen, Großmotoren, geländegängige Fahrzeuge, stationäre Motoren, Marinemotoren usw. zu verwenden.

Zusätzlich betrifft die Erfindung auch ein Verfahren zum Schmieren eines Pleuellagers an einer Kurbelwelle. Das Verfahren weist das Zuführen eines Fluids, insbesondere eines Kühlschmierfluids (zum Beispiel Öl), von einem Fluidkanal, insbesondere einem inneren Kühlfluidkanal, eines Kolbens über einen Verbindungskanal eines Pleuels zu dem Pleuellager auf.

Insbesondere kann das Fluid über ein kleines Pleuelauge des Pleuels in den Verbindungskanals zugeführt werden.

Vorzugsweise kann das Fluid über eine Fluidkammer eines Kolbenbolzens zugeführt werden.

Beispielsweise kann das Verfahren die hierin offenbarte Vorrichtung verwenden.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Schnittansicht durch einen Kolben einer Brennkraftmaschine gemäß einem ersten Ausführungsbeispiel;
- Figur 2: eine weitere Schnittansicht durch den Kolben, einen Kolbenbolzen und einen Pleuelkopf eines Pleuels gemäß dem ersten Ausführungsbeispiel;
- Figur 3: eine weitere Schnittansicht durch den Kolben, den Kolbenbolzen und den Pleuelkopf gemäß dem ersten Ausführungsbeispiel;
- Figur 4: eine Schnittansicht durch einen Pleuelfuß des Pleuel;
- Figur 5: eine Schnittansicht durch einen Kolben und einen Kolbenbolzen gemäß einem zweiten Ausführungsbeispiel;
- Figur 6: eine Schnittansicht durch einen Kolben und einen Kolbenbolzen gemäß einem dritten Ausführungsbeispiel;
- Figur 7: eine perspektivische Ansicht des Kolbens gemäß dem dritten Ausführungsbeispiel; und
- Figur 8: eine weitere Schnittansicht durch den Kolben und den Kolbenbolzen gemäß dem dritten Ausführungsbeispiel.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

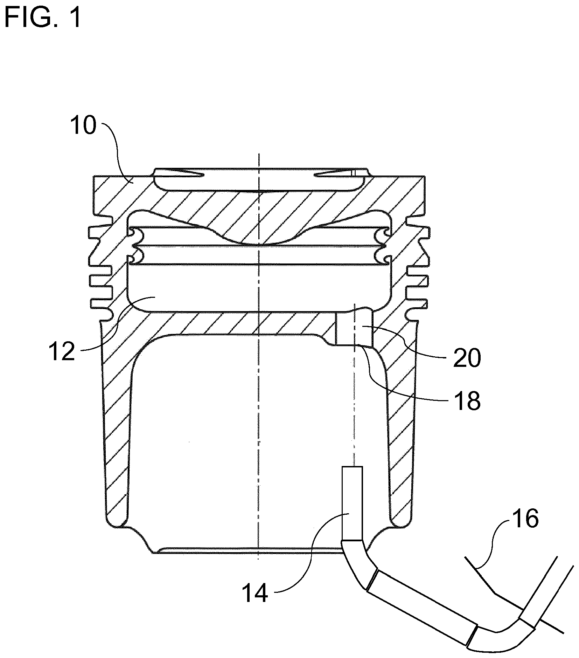

In Figur 1 ist ein Kolben 10 einer Brennkraftmaschine in einer Schnittebene, die exzentrisch zu einer Mittelachse des Kolbens 10 ist, dargestellt. Die Brennkraftmaschine kann beispielsweise in einem Kraftfahrzeug, insbesondere Nutzfahrzeug, umfasst sein. Das Nutzfahrzeug kann zum Beispiel ein Lastkraftwagen oder ein Omnibus sein. Die Brennkraftmaschine kann eine Mehrzahl von Zylindern mit mehreren Kolben 10 aufweisen.

Der Kolben 10 weist einen als inneren Kolbenkühlkanal ausgebildeten Fluidkanal 12 auf. Der Fluidkanal 12 kann sich beispielsweise ringförmig im Inneren des Kolbens 10 erstrecken. Mittels einer Fluideinspritzdüse 14 kann ein Fluid, insbesondere ein Kühlschmierfluid, zum Beispiel Öl, in den Fluidkanal 12 eingespritzt werden. Die Fluideinspritzdüse 14 kann beispielsweise an einem Kurbelgehäuse 16 (nur schematisch angedeutet) befestigt sein. Die Fluideinspritzdüse 14 ist auf eine Einlassöffnung 18 eines Einlasskanals 20 des Kolbens 10 gerichtet. Der Einlasskanal 20 mündet in den Fluidkanal 12. Durch die Einlassöffnung 18 eingespritztes Fluid von der Fluideinspritzdüse 14 gelangt über den Einlasskanal 20 in den Fluidkanal 12. Hier kühlt das Fluid den Kolben 10.

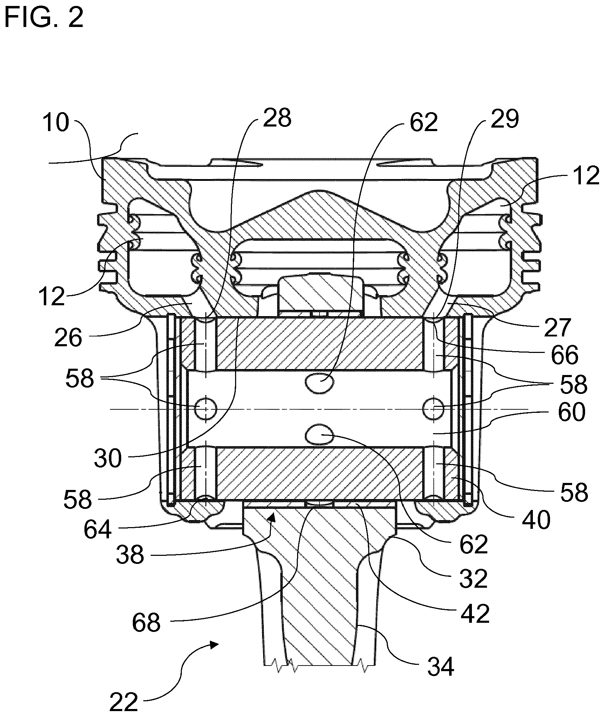

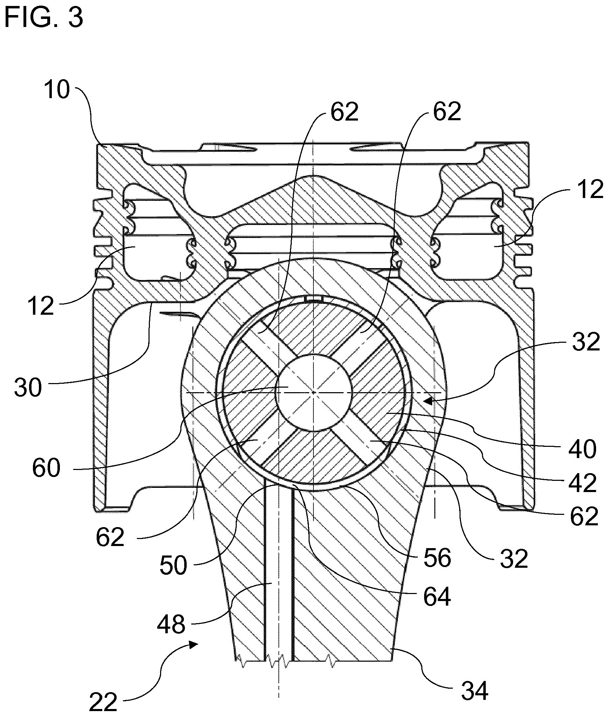

In den Figuren 2 und 3 ist der Kolben 10 in einer weiteren Schnittansicht dargestellt, wobei die Schnittebenen jeweils zentrisch zu der Mittelachse des Kolbens 10 und 90° versetzt zueinander sind. Aus Übersichtsgründen sind die Fluideinspritzdüse 14 und das Kurbelgehäuse 16 von Figur 1 in den Figuren 2 und 3 nicht dargestellt.

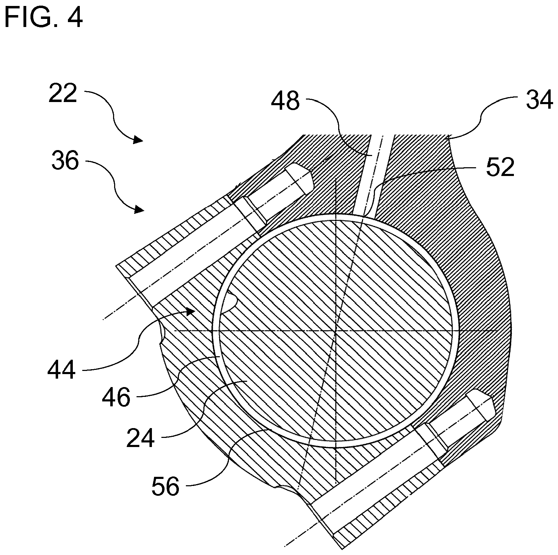

Der Kolben 10 ist über ein Pleuel 22 gelenkig, insbesondere schwenkbar, mit einer Kurbelwelle 24 (siehe Figur 4) verbunden. Die Kurbelwelle 24 ist an einem Kurbelgehäuse um eine Drehachse relativ zu dem Kurbelgehäuse drehbar gelagert. Der Kolben 10 ist translatorisch relativ zu einer Zylinderwandung eines Zylinders (nicht dargestellt) bewegbar. Die translatorischen Bewegungen des Kolbens 10 im Zylinder werden in eine rotatorische Bewegung der Kurbelwelle 24 um ihre Drehachse umgewandelt. Bei den translatorischen Aufwärts- und Abwärtsbewegungen des Kolbens 10 kann sich dieser an der Zylinderwandung abstützen.

Der Kolben 10 weist einen ersten Auslasskanal 26 und einen zweiten Auslasskanal 27 auf. Die Auslasskanäle 26, 27 erstrecken sich an gegenüberliegenden Seiten des Kolbens 10 zwischen dem Fluidkanal 12 und einer jeweiligen Auslassöffnung 28 bzw. 29 in einem Kolbenboden 30 des Kolbens 10, insbesondere im Bereich der Kolbenbolzenaugen des Kolbens 10. Die Auslasskanäle 26, 27 können ausgehend von dem Kolbenboden 30 in den Kolben 10 gebohrt sein. Bspw. können die Auslasskanäle 26, 27 als Schrägbohrungen vorgesehen sein, um auch einen radial außen im Kolben 10 angeordneten Fluidkanal 12 zu erreichen bzw. um eine Bohrung der Auslasskanäle 26, 27 im Bereich der Kolbenbolzenaugen zu ermöglichen. Die Auslassöffnungen 28, 29 sind in einem gerundeten Bereich des Kolbenbodens 30 angeordnet. Es ist bspw. auch möglich, dass nur ein Auslasskanal oder mehr als zwei Auslasskanäle vorgesehen sind.

Das Pleuel 22 weist einen Pleuelkopf 32, einen Pleuelschaft 34 und einen Pleuelfuß 36 (siehe Figur 4) auf. Der Pleuelschaft 34 erstreckt sich zwischen dem Pleuelkopf 32 und dem Pleuelfuß 36.

Der Pleuelkopf 32 weist ein kleines Pleuelauge 38 auf. In dem kleinen Pleuelauge 38 ist ein Kolbenbolzen 40 in einem bspw. als Gleitlager ausgebildeten Kolbenbolzenlager 42 gelagert. Der Kolbenbolzen 40 verbindet das Pleuel 22 schwenkbar mit dem Kolben 10. Der Kolbenbolzen 40 ist axial in dem Kolben 10 gesichert, z. B. über Sicherungsringe.

Der in Figur 4 dargestellte Pleuelfuß 36 weist ein großes Pleuelauge 44 auf. In dem großen Pleuelauge 44 ist ein bspw. als Gleitlager ausgebildetes Pleuellager 46 aufgenommen. Das Pleuellager 46 verbindet das Pleuel 22 schwenkbar mit einem Hubzapfen der Kurbelwelle 24.

Um eine Schmierung des Pleuellagers 46 zu realisieren, weist das Pleuel 22 einen Verbindungskanal 48 (siehe Figuren 3 und 4) auf. Der Verbindungskanal 48 kann eine Fluidverbindung von dem kleinen Pleuelauge 38 zu dem großen Pleuelauge 44 bilden. Damit bilden der Fluidkanal 12, der Auslasskanal 26 und der Verbindungskanal 48 eine Vorrichtung zum Schmieren des Pleuellagers 46.

Der Verbindungskanal 48 erstreckt sich zwischen einer Einlassöffnung 50 und einer Auslassöffnung 52. Die Einlassöffnung 50 ist in einer Innenumfangsfläche 54 des kleinen Pleuelauges 38 vorgesehen. Die Auslassöffnung 52 ist in einer Innenumfangsfläche 56 des großen Pleuelauges 44 vorgesehen.

Der Verbindungskanal 48 erstreckt sich beispielsweise zentrisch oder exzentrisch von dem Pleuelkopf 32 zu dem Pleuelfuß 36 des Pleuels 22. Der Verbindungskanals 48 kann beispielsweise als eine Durchgangsbohrung ausgebildet sein, die ausgehend von dem großen Pleuelauge 44 durch das Pleuel 22 gebohrt ist.

Um eine Fluidverbindung zwischen den Auslassöffnungen 28, 29 der Auslasskanäle 26, 27 und der Einlassöffnung 50 des Verbindungskanals 48 zu bilden, sind der Kolbenbolzen 40 und das Kolbenbolzenlager 42 speziell angepasst.

Der Kolbenbolzen 40 weist eine Mehrzahl von Einlasskanälen 58, eine Fluidkammer 60 und eine Mehrzahl von Auslasskanälen 62 auf.

Die Einlasskanäle 58 sind in einer Umfangsrichtung um eine Mittellängsachse des Kolbenbolzens 40 beabstandet zueinander angeordnet. Insbesondere sind die Einlasskanäle 58 in gleichen Abständen bzw. drehsymmetrisch um die Mittellängsachse des Kolbenbolzens 40 zueinander angeordnet. Die Einlasskanäle 58 bilden eine Fluidverbindung zwischen den Auslasskanälen 26, 27 und der Fluidkammer 60. Im Einzelnen münden die Auslasskanäle 26, 27 in Außenumfangsnuten 64, 66 des Kolbenbolzens 40. Die Außenumfangsnut 64 erstreckt sich an einem Ende des Kolbenbolzens 40 um einen Umfang des Kolbenbolzens 40. Die Außenumfangsnut 66 erstreckt sich an einem entgegengesetzten Ende des Kolbenbolzens 40 um den Umfang des Kolbenbolzens 40. Ein Teil der Einlasskanäle 58 verbindet die erste Außenumfangsnut 64 mit der Fluidkammer 60. Ein restlicher Teil der Einlasskanäle 58 verbindet die zweite Außenumfangsnut 66 mit der Fluidkammer 60.

Die Fluidkammer 60 ist als Durchgangsbohrung des Kolbenbolzens 40 ausgebildet. Die Fluidkammer 60 ist an beiden Stirnseiten des Kolbenbolzens 40 mit jeweils einer Abdeckung (nicht dargestellt) verschlossen.

Die Mehrzahl von Auslasskanälen 62 ist mittig im Kolbenbolzens 40 angeordnet. Die Auslasskanäle 62 sind in einer Umfangsrichtung um eine Mittellängsachse des Kolbenbolzens 40 beabstandet zueinander angeordnet. Insbesondere sind die Auslasskanäle 62 in gleichen Abständen zueinander bzw. drehsymmetrisch um die Mittelängsachse des Kolbenbolzens 40 angeordnet. Die Auslasskanäle 62 erstrecken sich von einer Innenumfangsfläche der Fluidkammer 60 zu einer Außenumfangsfläche des Kolbenbolzens 40.

Das Kolbenbolzenlager 42 weist einen Durchlass 68 auf. Der Durchlass 68 erstreckt sich in einer Umfangsrichtung zumindest teilweise in einem Umfang des Kolbenbolzenlagers 42. Der Durchlass 68 verbindet eine Innenumfangsfläche des Kolbenbolzenlagers 42 mit einer Außenumfangsfläche des Kolbenbolzenlagers 42. Der Durchlass 68 ist so dimensioniert, dass in Abhängigkeit von einer Drehposition des Kolbenbolzens 40 zumindest ein Auslasskanal 62 der mehreren Auslasskanäle 62 in den Durchlass 68 mündet. Der Durchlass 68 ist im Bereich der Einlassöffnung 50 des Verbindungskanals 48 vorgesehen. Damit bildet der Durchlass 68 eine Fluidverbindung zwischen den Auslasskanälen 62 und dem Verbindungskanal 48.

Somit besteht eine kontinuierliche Fluidverbindung zwischen dem Fluidkanal 12 und dem Pleuellager 46 über die Auslasskanäle 26, 27, die Außenumfangsnuten 64, 66, die Einlasskanäle 58, die Fluidkammer 60, die Auslasskanäle 62, den Durchlass 68 und den Verbindungskanal 48. Über die kontinuierliche Fluidverbindung kann zusätzlich der Kolbenbolzens 40 und das Kolbenbolzenlager 42 geschmiert werden. Außerdem können der Kolbenbolzen 40 und das Kolbenbolzenlager 42 durch Fluidnebel, zum Beispiel Ölnebel, der aus der Fluideinspritzung der Fluideinspritzdüse 14 (siehe Figur 1) resultiert, geschmiert werden.

Der Durchlass 68 kann hierbei so dimensioniert bzw. konfiguriert sein, dass eine Kavitationsneigung im Verbindungskanal 48 verringert wird, sodass insbesondere bei Abwärtsbewegungen des Pleuels 22 vom oberen Totpunkt zum unteren Totpunkt keine bzw. kaum Kavitation im Verbindungskanal 48 auftritt, die den Durchfluss beeinträchtigen würde. Insbesondere ist der Durchlass 68 als eine Drossel wirkend ausgebildet sein. Somit kann während der Abwärtsbewegung des Pleuels 22 nur wenig Fluid aus dem Verbindungskanal 48 entweichen.

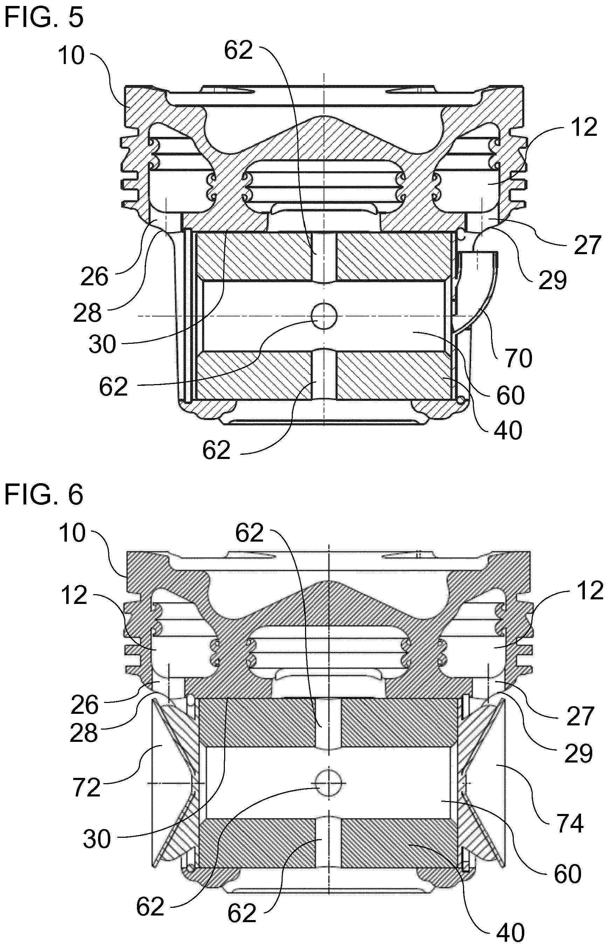

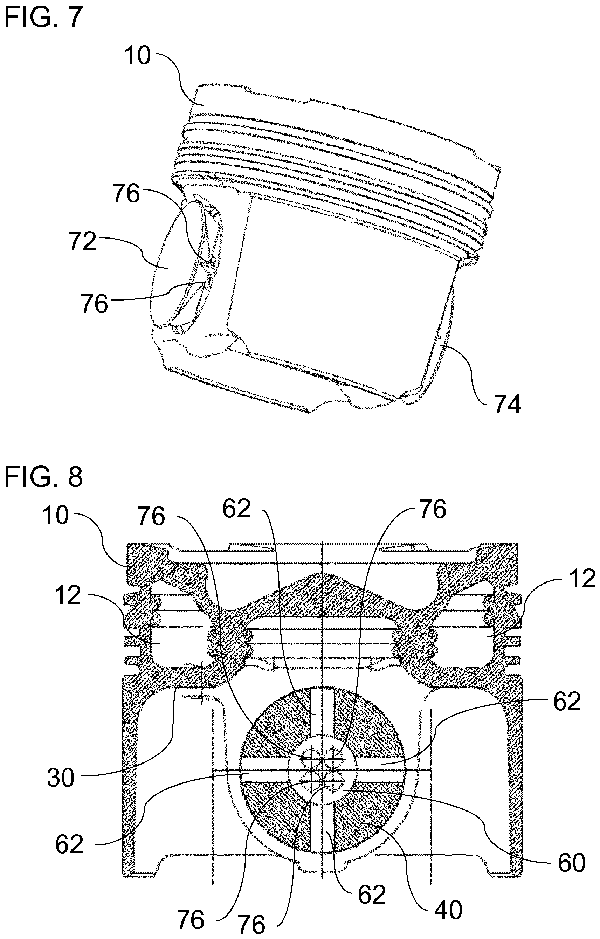

Es ist auch möglich, dass das Fluid auf andere Art und Weise als im ersten Ausführungsbeispiel in die Fluidkammer 60 gelangt, wie beispielhaft nachfolgend unter Bezugnahme auf die Figuren 5 bis 8 beschrieben ist.

Die Figur 5 zeigt ein zweites Ausführungsbeispiel. Hier wird mittels eines Fluidführungselements 70 das Fluid aus dem Auslasskanal 27 in die Fluidkammer 60 geleitet. Das Fluidführungselement 70 ist drehfest im Kolbenbolzenauge des Kolbens 10 in einer definierten Ausrichtung angeordnet. Das Fluidführungselement 70 ist unter der Auslassöffnung 29 des Auslasskanals 27 angeordnet. Das Fluidführungselement 70 ist als ein Umlenkrohrstück ausgebildet, das aus der Auslassöffnung 29 austretendes Fluid in die Fluidkammer 60 umlenkt. Hierzu ist das Fluidführungselement 70 stirnseitig zu dem Kolbenbolzens 40 angeordnet und bogenförmig geformt. Die andere Stirnseite des Kolbenbolzens 40 ist mit einer Abdeckung (nicht dargestellt) verschlossen. Es ist beispielsweise auch möglich, dass an beiden Stirnseiten des Kolbenbolzens 40 jeweils ein Fluidführungselement angeordnet ist.

Die Figuren 6 bis 8 zeigen ein drittes Ausführungsbeispiel. Hier wird mittels zweier Fluidführungselemente 72, 74 das Fluid aus den Auslasskanälen 26, 27 in die Fluidkammer 60 geleitet. Die Fluidführungselemente 72, 74 sind drehfest mit dem Kolbenbolzen 40 verbunden.

Die Fluidführungselemente 72, 74 sind so ausgebildet, dass unabhängig von einer Drehposition des Kolbenbolzens 40 das Fluid aus den Auslasskanälen 26, 27 in die Fluidkammer 60 geleitet wird. Insbesondere sind die Fluidführungselemente 72, 74 trichterförmig ausgebildet und weisen eine Mehrzahl von Durchlässen 76 auf, die das Fluid in die Fluidkammer 60 leiten. Je ein Durchlass 76 ist je einem trichterförmigen Abschnitt des Fluidführungselements 72 bzw. 74 zugeordnet. Somit ist unabhängig von der Drehposition des Kolbenbolzens 40 immer jeweils ein trichterförmige Abschnitt des Fluidführungselements 72 bzw. 74 unter den Auslasskanälen 26, 27 zur Aufnahme von Fluid positioniert.

Der hierin offenbarten Vorrichtungen zum Schmieren des Pleuellagers 46 basieren auf einem innovativen Schmierverfahren. Dieses Verfahren zum Schmieren weist das Zuführen, insbesondere Einspritzen, eines Fluids, zum Beispiel Öl, mittels der Fluideinspritzdüse 14 in den Fluidkanal 12 des Kolbens 10 auf. Das Verfahren weist ferner das Zuführen des Fluids von dem Fluidkanal 12 über mindestens einen Auslasskanal 26, 27 des Kolbens 10, das kleine Pleuelauge 38 und den Verbindungskanal 48 zu dem Pleuellager 46 auf. Insbesondere kann das Fluid über die Fluidkammer 60 des Kolbenbolzens 40 zu dem Verbindungskanal 48 geleitet werden. Es wird darauf hingewiesen, dass zum Durchführen des Verfahrens auch andere Konfigurationen insbesondere des Auslasskanals 26, des Kolbenbolzens 40 und des Verbindungskanals 48 möglich sind.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen. Insbesondere sind die Merkmale des unabhängigen Anspruchs 1 unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration des Kolbens und/oder des Pleuels des unabhängigen Anspruchs 1 offenbart.

### Bezugszeichenliste

- 10: Kolben
- 12: Fluidkanal
- 14: Fluideinspritzdüse
- 16: Kurbelgehäuse
- 18: Einlassöffnung
- 20: Einlasskanal
- 22: Pleuel
- 24: Kurbelwelle
- 26: Auslasskanal
- 27: Auslasskanal
- 28: Auslassöffnung
- 29: Auslassöffnung
- 30: Kolbenboden
- 32: Pleuelkopf
- 34: Pleuelschaft
- 36: Pleuelfuß
- 38: Kleines Pleuelauge
- 40: Kolbenbolzen
- 42: Kolbenbolzenlager
- 44: Großes Pleuelauge
- 46: Pleuellager
- 48: Verbindungskanal
- 50: Einlassöffnung
- 52: Auslassöffnung
- 54: Innenumfangsfläche
- 56: Innenumfangsfläche
- 58: Einlasskanal
- 60: Fluidkammer
- 62: Auslasskanal
- 64: Außenumfangsnut
- 66: Außenumfangsnut
- 68: Durchlass
- 70: Fluidführungselement
- 72: Fluidführungselement
- 74: Fluidführungselement
- 76: Durchlass

## Patentansprüche

1. Vorrichtung zum Schmieren eines Pleuellagers (46) an einer Kurbelwelle (24) einer Brennkraftmaschine, aufweisend:
einen Kolben (10) mit einem Fluidkanal (12), insbesondere einem inneren Kolbenkühlfluidkanal, und einem Auslasskanal (26) in Fluidverbindung mit dem Fluidkanal (12);
ein Pleuel (22), das gelenkig, insbesondere schwenkbar, mit dem Kolben (10) verbunden ist und ein kleines Pleuelauge (38), ein großes Pleuelauge (44) und einen Verbindungskanal (48) aufweist,
einen Kolbenbolzen (40), der in dem kleinen Pleuelauge (38) aufgenommen ist, das Pleuel (22) schwenkbar mit dem Kolben (10) verbindet und eine Fluidkammer (60) aufweist, die eine Fluidverbindung zwischen dem Auslasskanal (26) und dem Verbindungskanal (48) bildet,
wobei:
das große Pleuelauge (44) zur Aufnahme des Pleuellagers (46) ausgebildet ist;
das kleine Pleuelauge (38) in Fluidverbindung mit dem Auslasskanal (26) ist; und
der Verbindungskanal (48) eine Fluidverbindung zwischen dem kleinen Pleuelauge (38) und dem großen Pleuelauge (44) bildet, so dass ein Fluid, insbesondere ein Kühlschmierfluid, von dem Fluidkanal (12) über den Auslasskanal (26), das kleine Pleuelauge (38) und den Verbindungskanal (48) zu dem großen Pleuelauge (44) zuführbar ist oder zugeführt wird,
**gekennzeichnet durch**:
mindestens ein Fluidführungselement (70, 72, 74), das unter einer Auslassöffnung (52) des Auslasskanals (26) des Kolbens (10) angeordnet ist und über das das Fluid aus dem Auslasskanal (26) aufgenommen und stirnseitig in die Fluidkammer (60) des Kolbenbolzens (40) zuführbar ist.

2. Vorrichtung nach Anspruch 1, wobei:
der Kolbenbolzen (40) eine Außenumfangsnut (64), in die der Auslasskanal (26) mündet, aufweist und die Fluidkammer (60) des Kolbenbolzens (40) in Fluidverbindung zu der Außenumfangsnut (64) vorgesehen ist.

3. Vorrichtung nach einem der vorherigen Ansprüche, ferner aufweisend:
ein Kolbenbolzenlager (42), das in dem kleinen Pleuelauge (38) aufgenommen ist und einen Durchlass (68) aufweist, der sich zumindest teilweise um einen Umfang des Kolbenbolzenlagers (42) erstreckt.

4. Vorrichtung nach Anspruch 3, wobei:
der Durchlass (68) so dimensioniert ist, dass er als Drossel wirkt, um insbesondere eine Kavitationsneigung im Verbindungskanal (48) zu verringern.

5. Vorrichtung nach Anspruch 3 oder Anspruch 4, wobei:
der Kolbenbolzen (40) eine Mehrzahl von Auslasskanälen (62) aufweist, die in einer Umfangsrichtung um eine Mittellängsachse des Kolbenbolzens (40) beabstandet zueinander sind und Fluidverbindungen zwischen der Fluidkammer (60) und dem Durchlass (68) bilden.

6. Vorrichtung nach einem der vorherigen Ansprüche, wobei:
der Kolbenbolzen (40) eine Mehrzahl von Einlasskanälen (58) aufweist, die in einer Umfangsrichtung um eine Mittellängsachse den Kolbenbolzen (40) beabstandet zueinander sind und Fluidverbindungen zwischen der Außenumfangsnut (64) und der Fluidkammer (60) des Kolbenbolzens (40) bilden.

7. Vorrichtung nach Anspruch 5 oder Anspruch 6, wobei:
die Mehrzahl von Einlasskanälen (58) in einer Umfangsrichtung um die Mittellängsachsachse des Kolbenbolzens (40) drehsymmetrisch angeordnet ist; und/oder
die Mehrzahl von Auslasskanälen (62) in einer Umfangsrichtung um die Mittellängsachsachse des Kolbenbolzens (40) drehsymmetrisch angeordnet ist.

8. Vorrichtung nach einem der vorherigen Ansprüche, wobei:
das mindestens ein Fluidführungselement (70, 72, 74)ein Umlenkrohrstück oder ein Trichterbauteil ist.

9. Vorrichtung nach Anspruch 8, wobei:
das mindestens eine Fluidführungselement (70, 72, 74) drehfest in einem Kolbenbolzenauge des Kolbens (10) gelagert ist oder drehfest mit dem Kolbenbolzen (40) verbunden ist.

10. Vorrichtung nach einem der vorherigen Ansprüche, wobei:
der Auslasskanal (26) des Kolbens (10) in ein Kolbenbolzenauge mündet und, insbesondere, ein weiterer Auslasskanal (27) des Kolbens (10) in Fluidverbindung mit dem Fluidkanal (12) in ein gegenüberliegendes Kolbenbolzenauge des Kolbens (10) mündet.

11. Vorrichtung nach einem der vorherigen Ansprüche, wobei:
die Fluidverbindung zwischen dem Auslasskanal (26) und dem Verbindungskanal (48) eine kontinuierliche Fluidverbindung ist.

12. Vorrichtung nach einem der vorherigen Ansprüche, ferner aufweisend:
eine Fluideinspritzdüse (14), die auf eine Einlassöffnung (18) eines Einlasskanals (20) des Kolbens (10), der in Fluidverbindung mit dem Fluidkanal (12) ist, gerichtet ist.

13. Vorrichtung nach Anspruch 12, wobei:
die Fluideinspritzdüse (14) separat zu dem Kolben (10) und zu dem Pleuel (22) vorgesehen ist; und/oder
die Fluideinspritzdüse (14) in oder an einem Kurbelgehäuse (16) aufgenommen oder befestigt ist.

14. Kraftfahrzeug, insbesondere Nutzfahrzeug, mit einer Vorrichtung nach einem der vorherigen Ansprüche.

## Claims

1. Device for lubricating a big-end bearing (46) on a crankshaft (24) of an internal combustion engine, comprising:
a piston (10) with a fluid channel (12), in particular an internal piston cooling fluid channel, and an outlet channel (26) fluidically connected to the fluid channel (12);
a connecting rod (22) which is connected in articulated fashion, in particular pivotably, to the piston (10) and has a small connecting rod eye (38), a large connecting rod eye (44) and a connecting channel (48),
a piston pin (40) which is received in the small connecting rod eye (38), connects the connecting rod (22) pivotably to the piston (10), and has a fluid chamber (60) which in particular is formed as a continuous bore closed on both sides and forms a fluidic connection between the outlet channel (26) and the connecting channel (48),
wherein:
the large connecting rod eye (44) is configured to receive the big-end bearing (46);
the small connecting rod eye (38) is fluidically connected to the outlet channel (26); and
the connecting channel (48) forms a fluidic connection between the small connecting rod eye (38) and the large connecting rod eye (44) so that a fluid, in particular a cooling lubricant fluid, is or can be supplied from the fluid channel (12) to the large connecting rod eye (44) via the outlet channel (26), the small connecting rod eye (38) and the connecting channel (48),
**characterized by**:
at least one fluid guidance element (70, 72, 74) which is arranged below an outlet opening (52) of the outlet channel (26) of the piston (10) and via which the fluid is received from the outlet channel (26) and can be supplied to the fluid chamber (60) of the piston pin (40) on the end side.

2. Device according to Claim 2, wherein:
the piston pin (40) has an outer circumferential groove (64) into which the outlet channel (26) opens, and the fluid chamber (60) of the piston pin (40) is fluidically connected to the outer circumferential groove (64).

3. Device according to any of the preceding claims, furthermore comprising:
a small-end bearing (42) which is received in the small connecting rod eye (38) and has a passage (68) which extends at least partially around a circumference of the small-end bearing (42).

4. Device according to Claim 3, wherein:
the passage (68) is dimensioned such that it acts as a choke in order in particular to reduce a cavitation tendency in the connecting channel (48).

5. Device according to Claim 3 or Claim 4, wherein:
the piston pin (40) has a plurality of outlet channels (62) which are spaced apart from each other in a circumferential direction around a central longitudinal axis of the piston pin (40) and form fluidic connections between the fluid chamber (60) and the passage (68).

6. Device according to any of the preceding claims, wherein:
the piston pin (40) has a plurality of inlet channels (58) which are spaced apart from each other in a circumferential direction around a central longitudinal axis of the piston pin (40) and form fluidic connections between the outer circumferential groove (64) and the fluid chamber (60) of the piston pin (40).

7. Device according to Claim 5 or Claim 6, wherein:
the plurality of inlet channels (58) is arranged rotationally symmetrically in a circumferential direction around the central longitudinal axis of the piston pin (40); and/or
the plurality of outlet channels (62) is arranged rotationally symmetrically in a circumferential direction around the central longitudinal axis of the piston pin (40).

8. Device according to any of the preceding claims, wherein:
the at least one fluid guidance element (70, 72, 74) is a deflecting pipe piece or a hopper component.

9. Device according to Claim 8, wherein:
the at least one fluid guidance element (70, 72, 74) is mounted rotationally fixedly in a piston pin eye of the piston (10) or is connected rotationally fixedly to the piston pin (40).

10. Device according to any of the preceding claims, wherein:
the outlet channel (26) of the piston (10) opens into a piston pin eye, and in particular a further outlet channel (27) of the piston (10) in fluidic connection with the fluid channel (12) opens into an opposite piston pin eye of the piston (10).

11. Device according to any of the preceding claims, wherein:
the fluidic connection between the outlet channel (26) and the connecting channel (48) is a continuous fluidic connection.

12. Device according to any of the preceding claims, furthermore comprising:
a fluid injection nozzle (14), which is directed onto an inlet opening (18) of an inlet channel (20) of the piston (10) that is fluidically connected to the fluid channel (12).

13. Device according to Claim 12, wherein:
the fluid injection nozzle (14) is provided separately from the piston (10) and from the connecting rod (22); and/or
the fluid injection nozzle (14) is received in or attached to a crankcase (16).

14. Motor vehicle, in particular a utility vehicle, with a device according to any of the preceding claims.

## Revendications

1. Dispositif de lubrification d'un palier de bielle (46) au niveau d'un vilebrequin (24) d'un moteur à combustion interne, présentant :
un piston (10) avec un canal de fluide (12), en particulier un canal intérieur de fluide de refroidissement de piston, et un canal de sortie (26) en liaison fluidique avec le canal de fluide (12) ;
une bielle (22) qui est connectée de manière articulée, en particulier de manière pivotante, au piston (10) et présente un petit œil de bielle (38), un grand œil de bielle (34) et un canal de liaison (48),
un axe de piston (40) qui est reçu dans le petit œil de bielle (38), qui relie la bielle (22) de manière pivotante au piston (10) et qui présente une chambre de fluide (60) qui forme une liaison fluidique entre le canal de sortie (26) et le canal de liaison (48),
dans lequel
le grand œil de bielle (44) est réalisé pour recevoir le palier de bielle (46) ;
le petit œil de bielle (38) est en liaison fluidique avec le canal de sortie (26) ; et
le canal de liaison (48) forme une liaison fluidique entre le petit œil de bielle (38) et le grand œil de bielle (44), de telle sorte qu'un fluide, en particulier un fluide de lubrification de refroidissement, puisse être acheminé ou soit acheminé depuis le canal de fluide (12) par le biais du canal de sortie (26), du petit œil de bielle (38) et du canal de liaison (48) au grand œil de bielle (44),
**caractérisé par** :
au moins un élément de guidage de fluide (70, 72, 74) qui est disposé sous une ouverture de sortie (52) du canal de sortie (26) du piston (10) et par le biais duquel le fluide est repris du canal de sortie (26) et peut être acheminé du côté frontal dans la chambre de fluide (60) de l'axe de piston (40) .

2. Dispositif selon la revendication 1, dans lequel :
l'axe de piston (40) présente une rainure périphérique extérieure (64) dans laquelle débouche le canal de sortie (26) et la chambre de fluide (60) de l'axe de piston (40) est prévue de manière à être en liaison fluidique avec la rainure périphérique extérieure (64).

3. Dispositif selon l'une quelconque des revendications précédentes, présentant en outre :
un palier d'axe de piston (42) qui est reçu dans le petit œil de bielle (38) et qui présente un passage (68) qui s'étend au moins en partie autour d'une périphérie du palier d'axe de piston (42).

4. Dispositif selon la revendication 3, dans lequel : le passage (68) est dimensionné de telle sorte qu'il fonctionne en tant qu'étranglement afin de réduire notamment une tendance à la cavitation dans le canal de liaison (48).

5. Dispositif selon la revendication 3 ou la revendication 4, dans lequel :
l'axe de piston (40) présente une pluralité de canaux de sortie (62) qui sont espacés les uns des autres dans une direction périphérique autour d'un axe longitudinal médian de l'axe de piston (40) et qui forment des liaisons fluidiques entre la chambre de fluide (60) et le passage (68).

6. Dispositif selon l'une quelconque des revendications précédentes, dans lequel :
l'axe de piston (40) présente une pluralité de canaux d'entrée (58) qui sont espacés les uns des autres dans une direction périphérique autour d'un axe longitudinal médian de l'axe de piston (40) et qui forment des liaisons fluidiques entre la rainure périphérique extérieure (64) et la chambre de fluide (60) de l'axe de piston (40).

7. Dispositif selon la revendication 5 ou la revendication 6, dans lequel :
la pluralité de canaux d'entrée (58) est disposée avec une symétrie de révolution dans une direction périphérique autour de l'axe longitudinal médian de l'axe de piston (40) ; et/ou
la pluralité de canaux de sortie (62) est disposée avec une symétrie de révolution dans une direction périphérique autour de l'axe longitudinal médian de l'axe de piston (40).

8. Dispositif selon l'une quelconque des revendications précédentes, dans lequel :
l'au moins un élément de guidage de fluide (70, 72, 74) est une pièce tubulaire de déviation ou un composant en forme d'entonnoir.

9. Dispositif selon la revendication 8, dans lequel :
l'au moins un élément de guidage de fluide (70, 72, 74) est supporté de manière solidaire en rotation dans un trou d'axe de piston du piston (10) ou est connecté de manière solidaire en rotation à l'axe de piston (40).

10. Dispositif selon l'une quelconque des revendications précédentes, dans lequel :
le canal de sortie (26) du piston (10) débouche dans un trou d'axe de piston et, en particulier, un canal de sortie supplémentaire (27) du piston (10) en liaison fluidique avec le canal de fluide (12) débouche dans un trou d'axe de piston opposé du piston (10).

11. Dispositif selon l'une quelconque des revendications précédentes, dans lequel :
la liaison fluidique entre le canal de sortie (26) et le canal de liaison (48) est une liaison fluidique continue.

12. Dispositif selon l'une quelconque des revendications précédentes, présentant en outre :
une buse d'injection de fluide (14) qui est orientée vers une ouverture d'entrée (18) d'un canal d'entrée (20) de piston (10) qui est en liaison fluidique avec le canal de fluide (12).

13. Dispositif selon la revendication 12, dans lequel :
la buse d'injection de fluide (14) est prévue de manière séparée du piston (10) et de la bielle (22) ; et/ou
la buse d'injection de fluide (14) est reçue ou fixée dans ou sur un carter (16).

14. Véhicule automobile, en particulier véhicule utilitaire, comprenant un dispositif selon l'une quelconque des revendications précédentes.
